# EUROPÄISCHE PATENTSCHRIFT

(11) **EP 1 174 339 B1**
(45) Veröffentlichungstag und Bekanntmachung des Hinweises auf die Patenterteilung: **13.10.2004**
(21) Anmeldenummer: 01116689.9
(22) Anmeldetag: 17.07.2001
(51) Int. Cl.: B64C 27/473, B64C 27/615

(54) **Rotorblatt mit Steuerklappe**
Rotor blade with a control flap
Pale de rotor avec un volet de commande

(30) Priorität: 20.07.2000 DE 20012586 U
(43) Veröffentlichungstag der Anmeldung: 23.01.2002
(73) Patentinhaber: EADS Deutschland GmbH, 81663 München (DE)
(72) Erfinder: Lorkowski, Thomas, 82008 Unterhaching (DE); Hermle, Frank, 81673 München (DE)

(56) Entgegenhaltungen:
- EP-A- 0 734 947
- EP-A- 0 947 422
- US-A- 5 626 312

## Beschreibung

Die Erfindung betrifft Rotorblatt für einen Helikopter mit einer Blattwurzel zur Befestigung im Bereich des Rotormastes und einer radial außen liegenden Blattspitze, wobei zwischen Blattwurzel und Blattspitze eine im wesentlichen im Umriß des Blattprofils integrierte aerodynamische Steuerklappe schwenkbar im Rotorblatt gelagert ist.

Helikopter zeichnen sich gegenüber konventionellen Flugzeugen durch viele Vorteile aus. Das vertikale Starten und Landen erlaubt ein Manövrieren in örtlich begrenzten Gebieten. Durch die Fähigkeit, mit geringer Geschwindigkeit zu fliegen, kann der Helikopter für Überwachungsaufgaben eingesetzt werden. Die Möglichkeit des Schwebefluges prädestiniert den Helikopter als Einsatzgerät bei Rettungsaufgaben.

Der vertikale Auftrieb und der Vortrieb wird durch die Rotation der Rotorblätter um den Rotormast hervorgerufen, indem die Rotorblätter einen Auftrieb generieren, der je nach Stellung gegenüber dem Rotormast gerichtet ist. Die Stellung der Rotorblätter und somit der Auf- und Vortrieb des Helikopters ist normalerweise durch Verdrehen der Rotorblätter längs einer Achse in Spannweitenrichtung durch eine Taumelscheibe und ein zwischen dieser und dem Rotorblatt befindlichen Gestänge gewährleistet. Alternativ hierzu ist es möglich, die Stellung der Rotorblätter über Steuerklappen zu beeinflussen. Ein Verschwenken der Steuerklappe führt zur Änderung des Anströmverhaltens der Luft.

Dabei können Steuerklappen als Servoklappen an der Profilhinterkante benutzt werden, um das typische, schlagende Geräusch der Rotorblätter zu reduzieren. Dieses entsteht durch die Wechselwirkung der Rotorblätter mit Luftwirbeln, die sich vom vorangegangenen Rotorblatt ablösen. Servoklappen werden auf diesem Gebiet eingesetzt, um die Aerodynamik der Wechselwirkung zu mindern, in dem die Luftwirbel durch eine leichte Anstellung und Anziehung abgeschwächt und weiter nach außen abgestoßen werden.

Durch ein Heben und Senken einer an der Profilvorderkante angebrachten Wölbklappe als Steuerklappe werden die hohen Saugspitzen an der Profilvorderkante beim rücklaufenden Rotorblatt reduziert, womit die Strömungsablösung in dieser Phase verzögert und die Hystereseschleifen im Verlauf der aerodynamischen Koeffizienten verkleinert werden. Eine diskrete Wölbklappe an der Profilvorderkante erlaubt zudem die bei einer kontinuierlichen Konturvariation zur elastischen Verformung benötigte Energie für die Überwindung der aerodynamischen Kräfte und Momente einzusetzen oder eine gröBere Bewegungsautorität bereitzustellen.

Aus T. Lorkowski, P. Jänker, F. Hermle, S. Storm, M. Christmann, "Konzeptentwickung einer piezoaktuatorisch angetriebenen Vorderkantenklappe zur Dynamic-Stall-Verzögerung", DGLR-Jahrestagung 27.-30. September 1999, ist eine Wölbklappe an der Profilvorderkante bekannt, die mittels eines Präzisionswälzlagers schwenkbar an das Rotorblatt angelenkt ist und durch einen über der Schwenkachse liegenden Hebelanlenkpunkt geschwenkt wird.

Nachteilig wirkt sich bei einer Anordnung mit einem Präzisionswälzlager auf einer Achse aus, daß eine Montage der Wölbklappe in dem vorliegenden geringen Bauraum des Rotorblattes sich außerordentlich schwierig gestaltet. Außerdem kann es bei einer derart gelagerten Wölbklappe aufgrund der im Betrieb herrschenden Fliehkräfte von bis zu 1000 g zu einem Verkanten des mit einem gewissen Lagerspiel ausgelegten Wälzlagers und der Klappe auf der Achse und somit zu einem eingeschränkten Betrieb kommen. Die Möglichkeit des Verkantens wird im Betrieb unter den hohen Fliehkräften dadurch verstärkt, daß die Aktorik zur Verstellung der Wölbklappen ihre Energie über ein Steuergestänge außerhalb des Lagerpunktes aufbringt und somit weitere Kräfte zu berücksichtigen sind. Ein eingeschränkter Betrieb, starke Abnutzung der Komponenten und ein erhöhter Energieeintrag zur Bewegung der Servoklappe sind die Folge.

Außerdem ist aus EP-A-0 947 422 ein Rotorblatt mit einer in zwei Drehlager gelagerten Steuerklappe bekannt. Der Erfindung liegt nun die Aufgabe zugrunde, ein Rotorblatt mit einer aerodynamischen Steuerklappe anzugeben, bei der die Klappe mit hohen Stellgeschwindigkeiten im Betrieb bei einer Fliehkraftbelastung von bis zu 1000 g auf die Komponenten betrieben werden kann, ohne daß es zu einem Verkanten der Komponenten kommt. Außerdem soll die Steuerklappe sehr wartungsarm und einfach zu montieren sein.

Zur Lösung der Aufgabe ist ein Rotorblatt der eingangs beschriebenen Art erfindungsgemäß dadurch gekennzeichnet, daß die Steuerklappe an ihren beiden Enden jeweils über Wälzlager auf in Spannweitenrichtung des Rotorblatts ausgerichteten Lagerbolzen gelagert ist und daß das radial äußere Lager der Steuerklappe Mittel aufweist, welche die aus der Rotation des Rotorblattes sich ergebenden Fliehkräfte der Steuerklappe auf das Rotorblatt abstützen.

Bei dem erfindungsgemäßen Rotorblatt läßt sich die aerodynamische Steuerklappe durch die geteilte Achse einfach im Rotorblatt montieren und warten. Durch die Abstützung zwischen dem in Spannweitenrichtung äußeren Lager und der Steuerklappe verschiebt sich die Steuerklappe unter den großen Fliehkräften nicht nach außen, so daß es hierdurch nicht zu einem Verkanten der Steuerklappe auf der Achse kommen kann. Durch die beiden Wälzlager wird dieser Effekt noch weiter verstärkt.

Vorteilhafterweise sind die Lagerbolzen rotorblattseitig fixiert.

Die Lagerbolzen können in den Lageraugen verschweißt oder verklebt sein, vorteilhafterweise sind die Lagerbolzen aber in den Lageraugen verschraubt. Hierdurch ist im Bedarfsfall ein leichtes Auswechseln der beanspruchten Komponenten gewährleistet, ohne daß ein großer Reparaturaufwand betrieben werden muß. Außerdem erfolgt im Betrieb die Belastung der Lagerbolzen derart, daß ein Verschrauben zur Aufnahme der Kräfte ausreicht.

Als Wälzlager sind bevorzugt Nadellager eingesetzt. Die Steuerklappe wird zum Schwenken im allgemeinen über Steuergestänge angesteuert, wozu sich die Drehachse außerhalb der Anlenkachse des Steuergestänges befindet. Außerdem sind die Transversalkräfte aus den aerodynamischen Lasten gering, womit sämtliche Belastung in den Lagern von Nadellagem übernommen werden können. Es ist aber auch möglich, die Lager als mehrteilige Kugellager auszubilden.

Bevorzugt bestehen die Mittel zur Abstützung der Fliehkräfte auf die Steuerklappe und somit zur Verhinderung einer axialen Verschiebung der Steuerklappe aus einem im Lagerbolzen befindlichen Kugelabschnitt und einer hiermit in Wirkverbindung stehenden, die Steuerklappe in Spannweitenrichtung abstützenden Hohlpfanne. Besonders bevorzugt ist der Radius der Hohlpfanne größer gewählt als der Radius des Kugelabschnitts, wobei auch elliptische Abschnitte möglich sind. Hierdurch ist eine leichtgängige Punktlagerung gewährleistet, durch die eine Verschiebung der Steuerklappe in Spannweitenrichtung unterbunden wird, die bei der Bewegung wenig Energie in Wärme und Reibung umwandelt.

Vorteilhafterweise besteht die Hohlpfanne aus synthetischem Saphir, während der Kugelabschnitt aus Stahl besteht. Natürlich ist es auch möglich, eine Hohlpfanne aus einem anderen Lagerstein, so wie beispielsweise Rubin, einzusetzen. Auch dieses Material verschweißt bei Reibung nicht mit dem Kugelabschnitt.

Die Lageraugen zur Aufnahme der Lagerbolzen können in das Rotorblatt integriert sein, vorzugsweise sind die Lageraugen aber Bestandteile eines im Rotorblatt integrierbaren Rahmens. Hierdurch wird es möglich, die Steuerklappe samt Lagerung außerhalb des Rotorblattes vorzumontieren und nur die Anbindung an die über das Steuergestänge wirkende interne Aktorik im integrierten Zustand vornehmen zu müssen. Hierdurch erleichtert sich der Montageaufwand und die Reparaturfreundlichkeit wird weiter erhöht. Außerdem können auch die Lageraugen bei Verschleiß auf einfache Art und Weise ausgetauscht werden.

Die Erfindung wird im folgenden anhand eines in Zeichnungen dargestellten Ausführungsbeispiels näher beschrieben, aus dem sich weitere Einzelheiten, Merkmale und Verzüge ergeben. Es zeigt:
Fig. 1 eine schematische Aufsicht auf ein Profil mit einer an der Profilvorderkante angebrachten Wölbklappe, bei der auch die in das Rotorblatt integrierten Komponenten hervorgehoben wurden.
Fig. 2 einen Schnitt durch die in Fig. 1 dargestellte Ausführungsform entlang der Linie H.

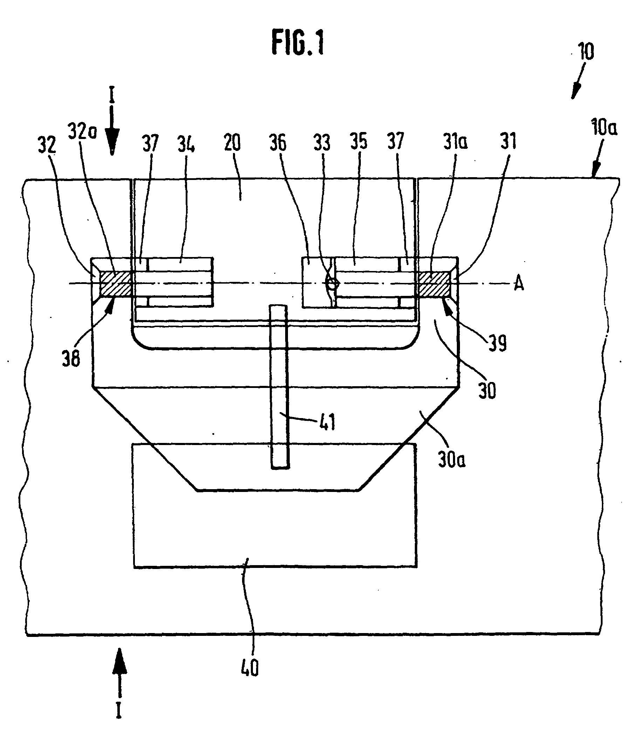

Das in Fig. 1 dargestellt Rotorblatt 10 weist an seiner Profilvorderkante 10a eine in das Profil integrierte Wölbklappe 20 auf. Im vorliegenden Fall verläuft die Spannweitenrichtung vom im Bild nicht dargestellten, auf der linken Seite befindlichen Rotormast zur ebenfalls nicht dargestellten, rechts befindlichen Profilspitze. In das Rotorblatt 10 integriert, befindet sich ein jochförmiger Rahmen 30, der die Wölbklappe 20 trägt. Der Rahmen 30 ist mittels eines Auslegers 30a in der Struktur des Rotorblatts 10 verankert. An den beiden Seiten des Rahmens befindet sich das in Spannweitenrichtung innere Lagerauge 38 und das in Spannweitenrichtung äußere Lagerauge 39. In diesen Lageraugen 38, 39 reichen die über Gewinde 32a, 31a eingeschraubten Lagerbolzen 32, 31 bis in die Wölbklappe hinein und bilden somit eine unterbrochene Drehachse A für die Wölbklappe 20. Auf den Lagerbolzen 32, 31 befinden sich die Nadellager 34, 35, über die sich die Wölbklappe 20 dreht. Die Abdichtung der Wälzlager unter Fliehkrafteinwirkung ist mittels konventioneller Wellendichtringen vorgenommen (nicht dargestellt). Die Dichtringe sind unsymmetrisch aufgebaut und erlauben in eine Richtung einen maximalen Druckunterschied von 0,2 bar. Hierdurch sind die Dichtringe tauglich, die unter Fliehkraft stehende Masse des eingebrachten Wälzlagerfettes auf die projizierte Fläche der Dichtung zurückzuhalten.

Auf der der Wölbklappe 20 zugewiesenen Seite des in Spannweitenrichtung äußeren Lagerbolzens 31 befindet sich ein stählener Kugelabschnitt 33, der in einer in der Servoklappe 20 befindlichen Hohlpfanne 36 aus synthetischem Saphir gelagert ist. Dabei ist der Radius der Hohlpfanne 36 größer gewählt als der des Kugelabschnitts 33, wodurch eine leichtgängige Punktlagerung entsteht. Die Hohlpfanne 36 steht in Spannweitenrichtung in Wirkverbindung mit der Wölbklappe 20 und verhindert somit unter Fliehkraft eine Bewegung der Wölbklappe in eine radiale Richtung.

Sowohl die Nadellager 34, 35 als auch die Hohlpfanne 36 sind hier als Einsätze ausgebildet und werden bei der Montage auf beidseitig in der Wölbklappe 20 eingebrachte Öffnungen/Bohrungen geschoben, deren Innenmaß dem Außenmaß der Lager 34, 35 und der Hohlpfanne 36 entsprechen. Diese Einsätze können mit weiteren Einsätzen und Kontermuttern 37 in ihrer Lage innerhalb der Wölbklappe fixiert werden.

Die zur Bewegung der Wölbklappe 20 notwendige Energie liefert im vorliegenden Ausführungsbeispiel die ebenfalls im Inneren des Rotorblatts 10 hinter der Klappe 20 angebrachte Aktorik 40, welche über ein Steuergestänge 41 auf die Wölbklappe 20 einwirkt.

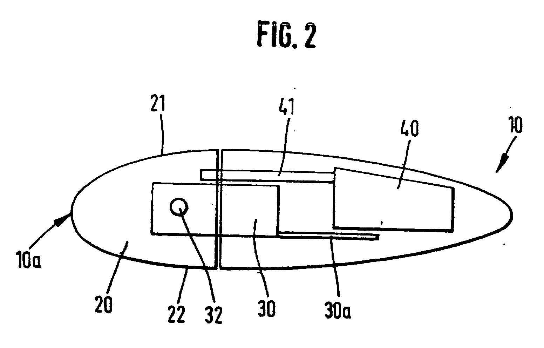

In Fig. 2 ist die obige Ausführungsform in einem Schnittentlang der Linie I-I dargestellt. Die Wölbklappe 20 ist an der Profilvorderkante 10a in das Rotorblatt 10 eingebracht. Die saugseitige Deckhaut 21 und die druckseitige Deckhaut 22 begrenzen sowohl die Wölbklappe 20 als auch das restliche Profil 10. Die Wölbklappe 20 ist mittels der Lagerbolzen 32, 31 gelenkig am Rahmen 30 angelenkt und kann nach oben und unten geschwenkt werden. Diese Bewegung wird von der inneren Aktorik 40 über das Steuergestänge 41 bewirkt.

## Patentansprüche

1. Rotorblatt (10) für einen Helikopter mit einer Blattwurzel zur Befestigung im Bereich des Rotormastes und einer radial auBen liegenden Blattspitze, wobei zwischen Blattwurzel und Blattspitze eine im wesentlichen im Umriß des Blattprofils integrierte aerodynamische Steuerklappe (20) schwenkbar im Rotorblatt gelagert ist, **dadurch gekennzeichnet, daß** die Steuerklappe (20) an ihren beiden Enden jeweils über Wälzlager (34,35) auf in Spannweitenrichtung des Rotorblatts ausgerichteten Lagerbolzen (32,31) gelagert ist und daß das radial äußere Lager (35,31) der Steuerklappe Mittel aufweist, (33,36) welche die aus der Rotation des Rotorblattes sich ergebenden Fliehkräfte der Steuerklappe auf das Rotorblatt abstützen.

2. Rotorblatt nach Anspruch 1, **dadurch gekennzeichnet, daß** die Lagerbolzen (31,32) rotorblattseitig fixiert sind.

3. Rotorblatt nach Anspruch 1 oder 2, **dadurch gekennzeichnet, daß** die Lagerbolzen in Lageraugen (38,39) verschraubt sind.

4. Rotorblatt nach einem oder mehreren der vorangegangenen Ansprüchen, **dadurch gekennzeichnet, daß** die Wälzlager (34,35) Nadellager sind.

5. Rotorblatt nach einem oder mehreren der vorangegangenen Ansprüchen, **dadurch gekennzeichnet, daß** die Mittel zur Abstützung der Fliehkräfte aus einem im äußeren Lagerbolzen befindlichen Kugelabschnitt (33) und einer die Steuerklappe in Spannweitenrichtung abstützende Hohlpfanne (36) bestehen.

6. Rotorblatt nach Anspruch 5, **dadurch gekennzeichnet, daß** der Radius der Hohlpfanne (36) größer ist als der Radius des Kugelabschnitts (33).

7. Rotorblatt nach Anspruch 5 oder 6, **dadurch gekennzeichnet, daß** der Kugelabschnitt (33) aus Stahl und die Hohlpfanne (36) aus synthetischem Saphir bestehen.

8. Rotorblatt nach einem oder mehreren der vorangegangenen Ansprüchen, **dadurch gekennzeichnet, daß** sich die Lageraugen (38,39) auf einem im Rotorblatt integrierbaren Rahmen (30) befinden.

## Claims

1. Rotor blade (10) for a helicopter having a blade root for fastening in the region of the rotor mast and having a radially outer blade tip, wherein between blade root and blade tip an aerodynamic control flap (20) integrated substantially in the contour of the blade profile is swivel-mounted in the rotor blade, **characterized in that** the control flap (20) at its two ends is mounted in each case by means of rolling bearings (34, 35) on bearing bolts (32, 31) aligned in the wing span direction of the rotor blade and that the radially outer bearing (35, 31) of the control flap comprises means (33, 36) for supporting the centrifugal forces of the control flap, resulting from the rotation of the rotor blade, that act upon the rotor blade.

2. Rotor blade according to claim 1, **characterized in that** the bearing bolts (31, 32) are fixed at the rotor blade side.

3. Rotor blade according to claim 1 or 2, **characterized in that** the bearing bolts are screw-fastened in bearing eyes (38, 39).

4. Rotor blade according to one or more of the preceding claims, **characterized in that** the rolling bearings (34, 35) are needle bearings.

5. Rotor blade according to one or more of the preceding claims, **characterized in that** the means of supporting the centrifugal forces comprise a ball portion (33), which is situated in the outer bearing bolt, and a hollow socket (36), which supports the control flap in the wing span direction.

6. Rotor blade according to claim 5, **characterized in that** the radius of the hollow socket (36) is greater than the radius of the ball portion (33).

7. Rotor blade according to claim 5 or 6, **characterized in that** the ball portion (33) is made of steel and the hollow socket (36) is made of synthetic sapphire.

8. Rotor blade according to one or more of the preceding claims, **characterized in that** the bearing eyes (38, 39) are situated on a frame (30) that may be integrated in the rotor blade.

## Revendications

1. Pale de rotor (10) pour un hélicoptère avec un pied de pale pour sa fixation dans la zone du mât rotor et une extrémité de pale située à l'extérieur radialement, un volet de commande (20) aérodynamique intégré sensiblement dans le contour du profil de pale étant monté de manière orientable dans la pale de rotor entre le pied de pale et l'extrémité de pale,
**caractérisée en ce que**
le volet de commande (20) est monté au niveau de ces deux extrémités via des paliers à roulement (34, 35) sur des tourillons de palier (32, 31) orientés dans la direction de la portée de la pale de rotor,et le palier extérieur radialement (35, 31) du volet de commande présente des moyens (33, 36) qui supportent les forces centrifuges du volet de commande générées par la rotation de la pale de rotor sur la pale de rotor.

2. Pale de rotor selon la revendication 1,
**caractérisée en ce que**
les tourillons de palier (31, 32) sont fixés du côté de la pale de rotor.

3. Pale de rotor selon la revendication 1 ou 2,
**caractérisée en ce que**
les tourillons de palier sont vissés dans des oeillets de palier (38, 39).

4. Pale de rotor selon une ou plusieurs des revendications précédentes,
**caractérisée en ce que**
les paliers à roulement (34, 35) sont des paliers à aiguilles.

5. Pale de rotor selon une ou plusieurs des revendications précédentes,
**caractérisée en ce que**
les moyens de support des forces centrifuges sont constitués d'une calotte sphérique (33) située dans les tourillons de palier et d'une cuvette (36) soutenant le volet de commande dans la direction de la portée.

6. Pale de rotor selon la revendication 5,
**caractérisée en ce que**
le rayon de la cuvette (36) est supérieur au rayon de la calotte sphérique (33).

7. Pale de rotor selon la revendication 5 ou 6,
**caractérisée en ce que**
la calotte sphérique (33) est en acier et la cuvette (36) en saphir synthétique.

8. Pale de rotor selon une ou plusieurs des revendications précédentes,
**caractérisée en ce que**
les oeillets de palier (38, 39) se trouvent sur un châssis (30) pouvant être intégré dans la pale de rotor.
